# EUROPEAN PATENT SPECIFICATION

(11) **EP 2 055 978 B1**
(45) Date of publication and mention of the grant of the patent: **24.03.2010**
(21) Application number: 09000728.7
(22) Date of filing: 12.12.2006
(51) Int. Cl.: F16D 48/06

(54) **Automatic clutch device**
Automatische Kupplungsvorrichtung
Dispositif d'embrayage automatique

(30) Priority: 24.02.2006 JP 2006048086; 18.04.2006 JP 2006114699
(43) Date of publication of application: 06.05.2009
(62) Divisional of application: 06025734.2
(73) Proprietor: Yamaha Hatsudoki Kabushiki Kaisha, Iwata-shi, Shizuoka-ken 438-8501 (JP)
(72) Inventor: Zenno, Tooru, Iwata-shi Shizuoka-ken 438-8501 (JP); Takeuchi, Yoshihiko, Iwata-shi Shizuoka-ken 438-8501 (JP)
(74) Representative: Grünecker, Kinkeldey, Stockmair & Schwanhäusser Anwaltssozietät

(56) References cited:
- EP-A2- 0 129 417
- EP-A2- 1 342 930
- DE-A1- 10 253 809
- JP-A- 2002 067 741
- US-A- 4 629 045

## Description

The present invention relates to an automatic clutch device with a clutch control device and an automatic wet type multiple plate clutch as well as a method to automatically control an automatic wet type multiple plate clutch.

The prior art document EP 1 342 930 A2 discloses a vehicle clutch control device and a control method of same. Said prior art clutch control device can be operated within a manual clutch mode as well as an automatic clutch mode. Said automatic clutch mode is based on a different parameter from the operation state of the clutch operation member and the respective control is separated to the manual clutch mode. Respective selection means are provided to select either the manual clutch mode or the automatic clutch mode and permits control of the clutch actuator by the control means in the selected mode. According to the specific teaching that can be taken from said prior art document, the automatic clutch mode is selected if a problem occurs while the manual clutch mode is selected, so that the manual clutch mode can be understood as some kind of operation mode used under restricted operating conditions only.

Said prior art device is provided with a stroke sensor arranged in close relation to the stroke pedal. Said stroke pedal constitutes an actuating means for the clutch. In case where a problem is caused by a malfunction of the stroke sensor it is difficult to properly control the clutch actuator in the manual clutch mode where the signal of this stroke sensor is used. Said prior art document suggests for such cases to select the automatic clutch mode and in the automatic clutch mode a signal of the sensor other than the stroke sensor is used to control the clutch actuator.

There have conventionally been known vehicles including an automatic clutch device for engaging and disengaging a friction clutch through an electric actuator, further including a clutch position sensor for directly or indirectly detecting the position of the friction clutch (the distance between the friction plate and the clutch plate) (see Patent Document 1, for example).

For use in the vehicles including the clutch position sensor such as described above, there is known a technique for adjusting the position of the clutch through drive control of the actuator according to the engine speed based on a preset map, for example when the vehicle starts to run. This technique allows smooth shift change.
Patent Document 1: JP-A-2002-067741

The drive control of the automatic clutch device such as described above is initially set such that most users will feel comfortable with the drivability. However, some users (especially, users of a two-wheeled motor vehicle, who have a strong tendency to pursue the drivability) are extremely particular about the response made when the vehicle starts to run or is at a shift change, and may feel uncomfortable with the initial setting. The users will feel greater discomfort particularly when they cannot obtain the response exactly as they desired according to an accelerator operation by the users around the exit of a sharp curve.

It is an object of the present invention to provide an automatic clutch device with a clutch control device and an automatic wet type multiple plate clutch as well as a method to automatically control an automatic wet type multiple plate clutch that can make adjustable response at the vehicle start up or at shift change and then allows easy or suitable clutch connection in accordance with user intentions.

According to the apparatus aspect of the present invention, said objective is solved by an automatic clutch device with a clutch control device and an automatic wet type multiple plate clutch having the features of independent claim 1. Preferred embodiments are laid down in the further claims.

Preferably, said clutch, is interposed between a driving-side power transmission mechanism and a driven-side power transmission mechanism.

Further, preferably the driving-side rotational speed detection means detects the driving-side rotational speed, which is a rotational speed of a driving part of the clutch, or the driving-side power transmission mechanism.

Yet further, preferably the storage means is a map storage means for storing plural types of regulation maps for regulating the target position of the clutch.

Still further yet, preferably the clutch position change means changes the target position based on one or more regulation maps selected from the plural types of regulation maps according to human manipulation.

Preferably, the clutch position change means performs a specific correction computation process on the regulation map, and changes the target position based on the corrected regulation map obtained through the correction computation process.

Further, preferably the map storage means can overwrite the regulation map.

Yet further, preferably the regulation map regulates a relationship between the driving-side rotational speed and the target position of the clutch.

Still further, preferably the driving-side power transmission mechanism includes an engine, and the regulation map regulates a relationship between an engine rotational speed and the target position of the clutch at a time of vehicle start-up.

According to a another preferred embodiment, the clutch control device further comprises a driven-side rotational speed detection means for detecting a driven-side rotational speed, which is a rotational speed of a driven part of the clutch, in particular of the friction clutch, or the driven-side power transmission mechanism.

Preferably, the regulation map regulates a relationship between a clutch rotational speed difference, which is a difference between the driving-side rotational speed and the driven-side rotational speed, and a driving speed of the actuator.

Further, preferably the clutch control means is mounted on a vehicle provided with a gearbox, and the regulation map regulates a relationship between the clutch rotational speed difference and the driving speed of the actuator at a time of a shift up or a shift down.

Still further, preferably the regulation map regulates a relationship between a clutch rotational speed difference, which is a difference between the driving-side rotational speed and the driven-side rotational speed, and the target position of the clutch.

Yet further, preferably the clutch control means is mounted on a vehicle provided with a gearbox, and the regulation map regulates a relationship between the clutch rotational speed difference and the target position of the clutch at a time of a shift up or a shift down.

This objective is further solved by a vehicle comprising the automatic clutch and a clutch control device according to one of the above embodiments.

Preferably, the automatic clutch is of a hydraulic type.

Further, preferably the actuator is a motor.

For the method aspect, this objective is solved by a method to automatic control an automatic wet type multiple plate clutch having the features of independent claim 18.

In the following, the present invention is explained in greater detail with respect to several embodiments thereof in conjunction with the accompanying drawings, wherein:
- FIG. 1: is a side view of a two-wheeled motor vehicle according to an embodiment,
- FIG. 2: is a configuration diagram of a driving system of the two-wheeled motor vehicle,
- FIG. 3: is a block diagram illustrating the entire configuration of a control system mounted on the two-wheeled motor vehicle,
- FIG. 4: is a block diagram illustrating a driving system device group,
- FIG. 5: is a block diagram illustrating a sensor/switch group,
- FIG. 6: shows regulation maps stored in an EEPROM,
- FIG. 7: shows the transition of the state of the two-wheeled motor vehicle at vehicle start-up,
- FIG. 8: shows starting regulation maps for respective running modes,
- FIG. 9: shows the transition of the state of the two-wheeled motor vehicle at a shift up,
- FIG. 10: shows shift-up regulation maps for the respective running modes,
- FIG. 11: shows shift-up regulation maps for the respective running modes,
- FIG. 12: shows the transition of the state of the two-wheeled motor vehicle at a shift down,
- FIG. 13: shows shift-down regulation maps for the respective running modes, and
- FIG. 14: shows shift-down regulation maps for the respective running modes.

### Description of Reference Numerals and Symbols:

10: two-wheeled motor vehicle (saddle-type vehicle)
11: body frame
16: seat
28: engine unit
36: brake pedal
39: brake lever
43: shift switch
43a: shift up switch
43b: shift down switch
54: clutch (friction clutch)
63: clutch actuator (actuator)
64: hydraulic pressure transmitting mechanism
65: shift actuator
68: clutch position sensor (clutch position detection device)
70: gear position sensor
71: rod
72: lever
73: pinion
74: rack
77: automatic clutch device
90: main microcomputer (clutch position change means, drive control unit)
91: ROM
91 a: clutch actuator control program
91 b: shift actuator control program
92: RAM
94: EEPROM (map storage device)
94a (1a-1i, 2a-2i, 3a-3i): regulation map
96: main switch
97: battery
98: power source circuit
100: ECU (clutch control device)

In the process of developing a clutch control device including at least a driving-side rotational speed detection device for detecting the rotational speed of the driving side of a friction clutch (the driving part of the friction clutch or a driving-side power transmission mechanism) (= driving-side rotational speed), and a clutch position detection device for detecting the clutch position, the present inventor made new findings as follows. In the case where the target position of the clutch (which is hereinafter referred to as "target clutch position") is set and stored in association with the driving-side rotational speed, and an automatic clutch device its controlled such that the clutch position reaches the target clutch position, just a slight change in the target clutch position causes a significant change in the response, even without making any change to the control method.

A possible reason for this -- and what the present inventor focused attention on -- is that the clutch rotational speed difference can be converged more quickly than before when the target clutch position is set closer to the engagement side than conventionally. For example, at a gear change, the half-clutch period is shortened and response is improved. Also, at the time of vehicle start-up, the rotational speed of the driven side of the clutch (the driven part of the friction clutch or a driven-side power transmission mechanism) (= driven-side rotational speed) increases more rapidly. As a result, the vehicle speed increases at a higher rate and response is improved. In this way, changing the target clutch position closer to the engagement side can reduce the period for a half-clutch state, which can improve response. The present inventor utilized this chain of operations, and has invented a clutch control device that can adjust response easily by artificially changing the target clutch position.

Description is hereinafter made of embodiments in detail with reference to the drawings.

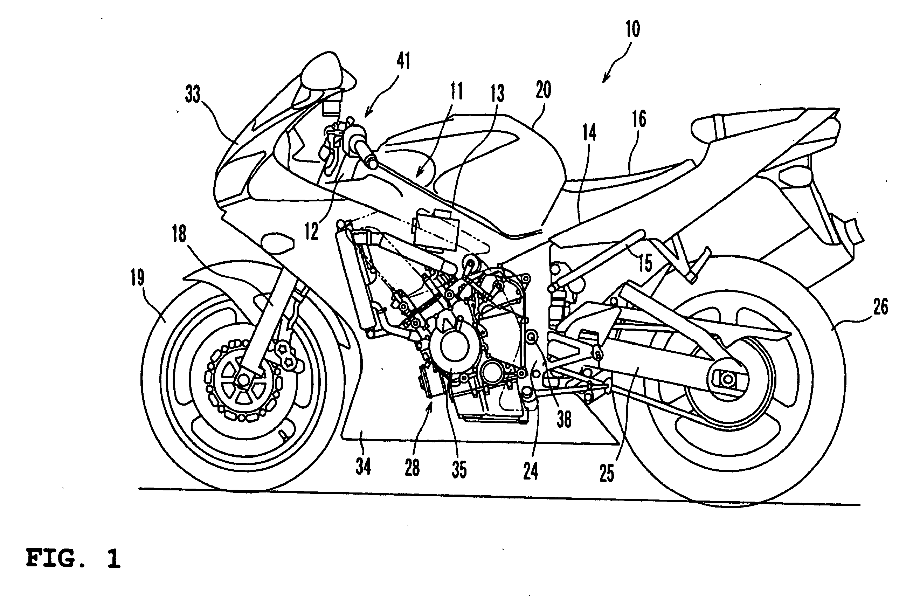

As shown in FIG. 1, the straddle-type vehicle according to this embodiment is a two-wheeled motor vehicle 10. The two-wheeled motor vehicle 10 has a body frame 11 which forms the skeleton thereof and a seat 16 on which a rider can be seated. The rider seated on the seat 16 straddles the body frame 11 to be on the vehicle. In the present invention, the shape of the vehicle is not limited to the one shown in FIG. 1, and the maximum speed, displacement and size of the vehicle are not limited. The saddle-type vehicle according to the present invention is not limited to a so-called motorcycle type two-wheeled motor vehicle having a fuel tank in front of the seat, and may be a two-wheeled motor vehicle of a different type. Also, the saddle-type vehicle according to the present invention is not limited to a two-wheeled motor vehicle and may be a saddle-type vehicle of a different type such as a four-wheeled buggy.

In the following description, front, rear, right and left refer to the directions as viewed from a rider seated on the seat 16. The body frame 11 has a steering head pipe 12, a main frame 13 extending rearward and obliquely downward from the steering head pipe 12, right and left seat rails 14 extending rearward and obliquely upward from an intermediate portion of the main frame 13, and right and left seat pillar tubes 15 each connected to the rear end of the main frame 13 and an intermediate portion of the corresponding seat rail 14.

A front wheel 19 is supported by the steering head pipe 12 via a front fork 18. A fuel tank 20 and the seat 16 are supported on the seat rails 14. The seat 16 extends from a position on the fuel tank 20 toward the rear ends of the seat rails 14. The fuel tank 20 is placed on the front halves of the seat rails 14.

A pair of right and left rear arm brackets 24 are provided at the rear end of the main frame 13. Here, the rear arm brackets 24 and so on provided on the main frame 13 form a part of the body frame 11.

The rear arm brackets 24 protrude downward from the rear end of the main frame 13. The rear arm brackets 24 have a pivot shaft 38, and the front end of a rear arm 25 is swingably supported by the pivot shaft 38. A rear wheel 26 is supported at the rear end of the rear arm 25.

An engine unit 28 for driving the rear wheel 26 is also supported by the body frame 11. A crankcase 35 is suspended from and supported by the main frame 13. In this embodiment, the engine unit 28 has a gasoline engine (not shown). The engine of the engine unit 28 is not limited to an internal combustion engine, such as a gasoline engine, and may be a motor engine or the like. Also, the engine may be a combination of a gasoline engine and a motor engine.

The two-wheeled motor vehicle 10 has a front cowling 33 and right and left leg shields 34. The leg shields 34 are cover members for covering front parts of the rider's legs.

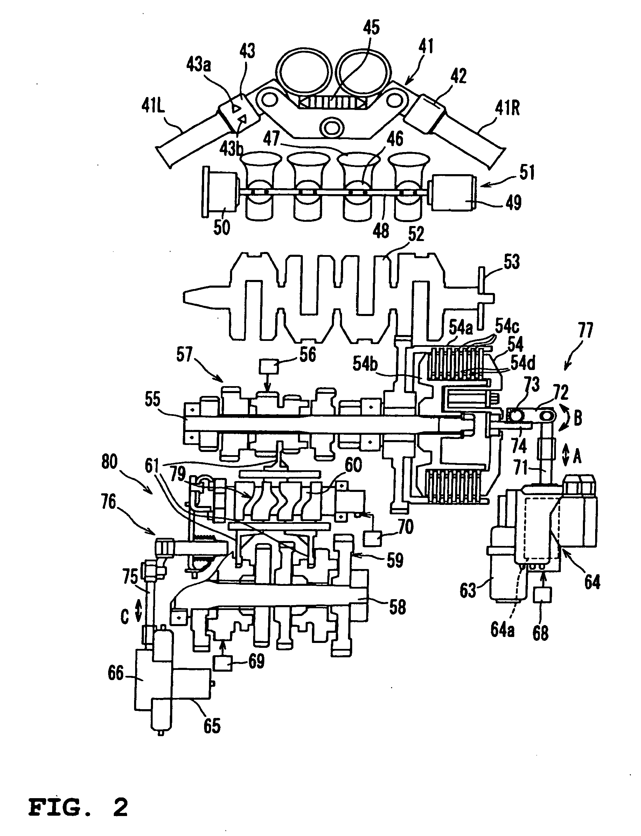

A brake pedal is provided at a lower right part of the two-wheeled motor vehicle 10 although not shown in FIG. 1. The brake pedal is used to stop the rear wheel 26. The front wheel 19 is stopped by operating a brake lever (not shown) provided in the vicinity of a right grip 41 R (see FIG. 2) of handlebars 41.

FIG. 2 is a configuration diagram of a driving system of the two-wheeled motor vehicle shown in FIG. 1. The right grip 41 R of the handlebars 41 (see also FIG. 1) constitutes an accelerator grip, and a throttle input sensor 42 is attached to the accelerator grip. The throttle input sensor 42 detects an accelerator input (throttle opening input) by the rider. A shift switch 43 is provided on the side of the left grip 41 L on the handlebars 41. The shift switch 43 has a shift up switch 43a and a shift down switch 43b, and can change the shift position between neutral and top gear (sixth gear in this embodiment) by manual operation to increase or decrease the speed. Also, at the center of the handlebars 41, an indicator 45 for indicating the current shift position and so on is provided.

Throttle valves 46 are attached to throttles 47 forming an air intake passage. A throttle driving actuator 49 is provided at the right end of a valve shaft 48 for the throttle valves 46, and a throttle opening sensor 50 is provided at the left end of the valve shaft 48. The throttle driving actuator 49 and the throttle opening sensor 50 attached to the valve shaft 48 constitute a DBW (drive-by-wire) 51. The DBW 51 opens or closes the throttles 47 with the throttle driving actuator 49 depending on the results of detection by the throttle opening sensor 50.

An engine rotational speed sensor 53 is provide at the right end of a crankshaft 52 connected to the engine (not shown). The crankshaft 52 is connected to a main shaft 55 via a wet multiple plate clutch 54. The clutch 54 has a clutch housing 54a and a clutch boss 54b. A plurality of friction plates 54c are attached to the clutch housing 54a, and a plurality of clutch plates 54d are attached to the clutch boss 54b. Each of the clutch plates 54d is placed between adjacent friction plates 54c and 54c. In the present embodiment, the friction clutch is not limited to a wet multiple plate clutch and may be a dry clutch or a single plate clutch, for example. A plurality of (six in FIG. 2) shift gears 57 are mounted on the main shaft 55, and a main shaft rotational speed sensor 56 is attached to the main shaft 55. The shift gears 57 mounted on the main shaft 55 are in meshing engagement with shift gears 59 mounted on a drive shaft 58 disposed parallel to the main shaft 55. In FIG. 2, the shift gears 57 and the shift gears 59 are separated for convenience of explanation.

Both or either the shift gears 57 and/or the shift gears 59 are mounted on the main shaft 55 or the drive shaft 58 in such a manner as to idle relative thereto except for selected gears. Therefore, transmission of driving force from the main shaft 55 to the drive shaft 58 is made only through a pair of selected shift gears.

The operation to select a shift gear 57 and a shift gear 59 for a gear change is carried out by a shift cam 79. The shift cam 79 has a plurality of (three in FIG. 2) cam grooves 60, and a shift fork 61 is received in each cam groove 60. Each shift fork 61 is engaged with specific shift gears 57 and 59 on the main shaft 55 and the drive shaft 58. When the shift cam 79 rotates, the shift forks 61 move axially along the cam grooves 60, and a pair of shift gears 57 and 59 at a position corresponding to the rotational angle of the shift cam 79 are spline-engaged with the main shaft 55 and the drive shaft 58. The spline-engaged pair of speed gears 57 and 59 transmit driving force from the main shaft 55 to the drive shaft 58. The shift gears 57 and 59, and the shift cam 79 constitute a gearbox 80.

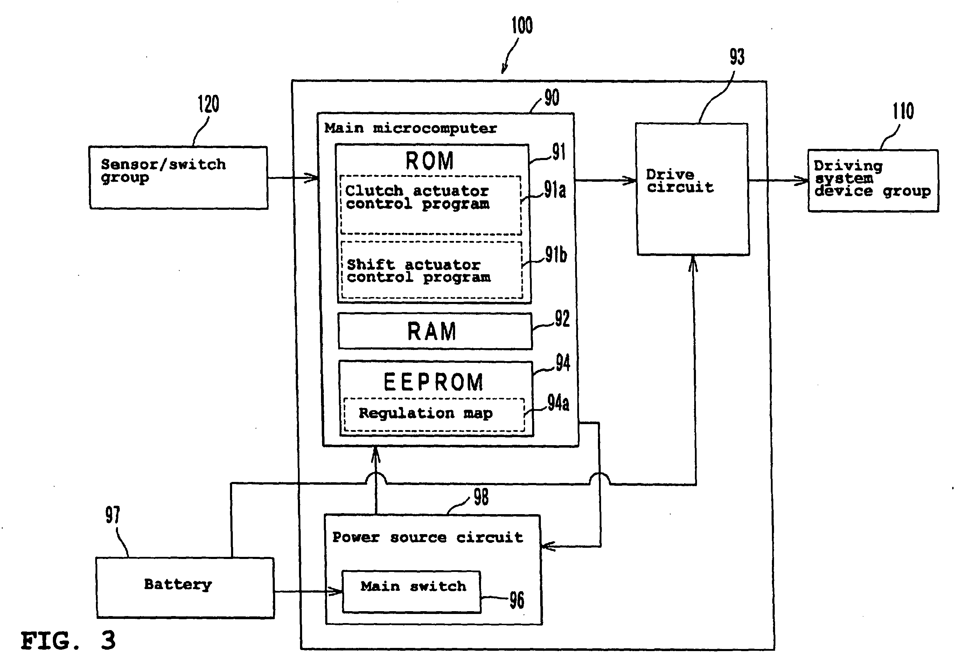

The clutch 54 and the gearbox 80 described above are driven by a clutch actuator 63 and a shift actuator 65, respectively. The clutch actuator 63 is connected to the clutch 54 via a hydraulic pressure transmitting mechanism 64, a rod 71, a lever 72, a pinion 73 and a rack 74. The hydraulic pressure transmitting mechanism 64 is a mechanism which has a hydraulic cylinder 64a, an oil tank (not shown) and so on, and which is driven by the clutch actuator 63 to generate hydraulic pressure and transmits the hydraulic pressure to the rod 71. When the rod 71 is driven by the clutch actuator 63 to reciprocate as indicated by the arrow A, the lever 72 rotates as indicated by the arrow B, whereby the clutch 54 is engaged or disengaged depending on the moving direction of the rack 74. Although an electric motor is employed as the clutch actuator 63 in this embodiment, the present invention is not limited thereto. For example, a solenoid or an electromagnetic valve may be used. An automatic clutch device 77 in the present invention is constituted with the clutch 54, the clutch actuator 63, the hydraulic pressure transmitting mechanism 64, the rod 71, the lever 72, the pinion 73, the rack 74, and an ECU 100 (see FIG. 3) for drive control of the clutch actuator 63.

The shift actuator 65 is connected to the shift cam 79 via a reduction mechanism 66, a rod 75 and a link mechanism 76. The reduction mechanism 66 has a plurality of reduction gears (not shown). At the time of a gear change, the rod 75 is driven by the shift actuator 65 to reciprocate as indicated by the arrow C, and the shift cam 79 is rotated by a specific angle via the link mechanism 76. The shift forks 61 thereby move axially a specific distance along the cam grooves 60, and a pair of shift gears 57 and 59 are fixed to the main shaft 55 and the drive shaft 58, respectively. Then, driving force is transmitted from the main shaft 55 to the drive shaft 58. Although an electric motor is employed as the shift actuator 65 in this embodiment, the present invention is not limited thereto. For example, a solenoid or an electromagnetic valve may be used.

The hydraulic pressure transmitting mechanism 64 connected to the clutch actuator 63 has a clutch position sensor 68 which detects the stroke position of the piston to detect the clutch position (the distance between the friction plates 54c and the clutch plates 54d). Although the clutch position sensor 68 detects the stroke position of the piston to detect the clutch position in this embodiment, the present invention is not limited thereto. The position of a transmitting mechanism disposed between the clutch actuator 63 and the clutch 54 may be detected. For example, the position of the rod 71 or the rack 74 may be detected. The clutch position is not necessarily obtained indirectly from a detected stroke position of the piston as in this embodiment. The distance between the friction plates 54c and the clutch plates 54d may be directly measured with a sensor. Also, a vehicle speed sensor 69 is provided on the drive shaft 58. In addition, a gear position sensor 70 for detecting the gear position (the amount of rotation of the shift cam) is provided on the shift cam 79.

A shift change is carried out when an ECU 100 (engine control unit), which is described later, performs drive control of the clutch actuator 63 and the shift actuator 65 in response to an operation of the shift up switch 43a or the shift down switch 43b. More specifically, a series of operations: disengagement of the clutch 54 by the clutch actuator 63 → gear change of the shift gears 57 and 59 by the shift actuator 65 → engagement of the clutch 54 by the clutch actuator 63, is performed based on a specific program or map.

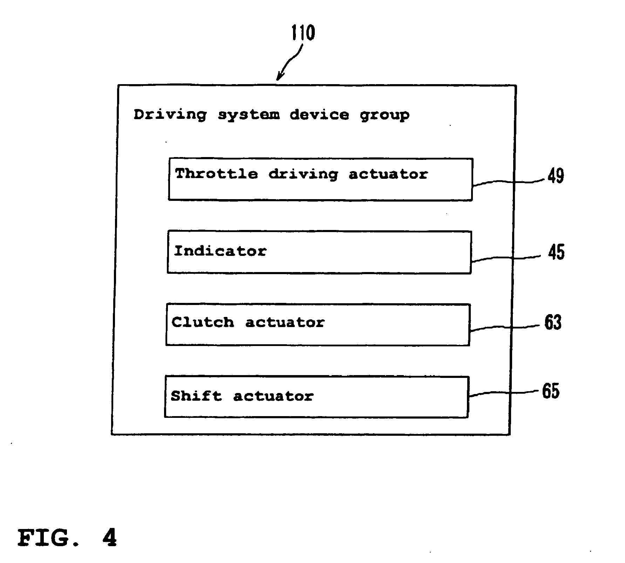

FIG. 3 is a block diagram illustrating the entire configuration of a control system mounted on the two-wheeled motor vehicle 10. A driving system device group 110 is connected to a main microcomputer 90 of ECU 100 via a drive circuit 93. The driving system device group 110 consists of the throttle driving actuator 49, the indicator 45, the clutch actuator 63 and the shift actuator 65 (see also FIG. 2) as shown in FIG. 4.

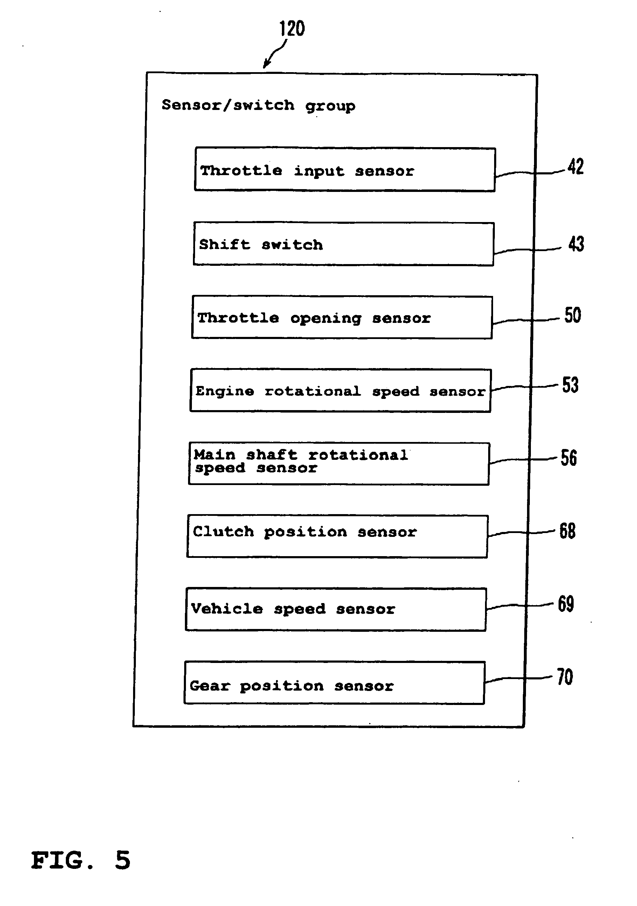

The drive circuit 93 supplies appropriate currents to the devices forming the driving system device group 110 from a battery 97 in response to a drive signal fed from the main microcomputer 90. A sensor/switch group 120 is also connected to the main microcomputer 90. The sensor/switch group consists of the throttle input sensor 42, the shift switch 43, the throttle opening sensor 50, the engine rotational speed sensor 53, the main shaft rotational speed sensor 56, the clutch position sensor 68, the vehicle speed sensor 69 and the gear position sensor 70 as shown in FIG. 5 (see also FIG. 2), and the results of detections by the sensors are inputted into the main microcomputer 90. The main microcomputer 90 feeds drive signals to the devices forming the driving system device group 110 based on the results of detections received from the sensors to perform drive control of them.

The main microcomputer 90 has a ROM 91, a RAM 92 and an EEPROM 94. A clutch actuator control program 91 a and a shift actuator control program 91 b are stored in the ROM 91. The clutch actuator control program 91 a is a program for drive control of the clutch actuator 63 with reference to a regulation map 94a which is described later. The shift actuator control program 91 b is a program for drive control of the shift actuator 65. The programs stored in the ROM 91 are not deletable, and a new program and so on cannot be written into the ROM 91.

When the clutch actuator control program 91a or the shift actuator control program 91b is executed, the program is expanded on the RAM 92 and then read into the main microcomputer 90. Then, the main microcomputer 90 performs drive control of the clutch actuator 63 or the shift actuator 65 based on the program expanded on the RAM 92.

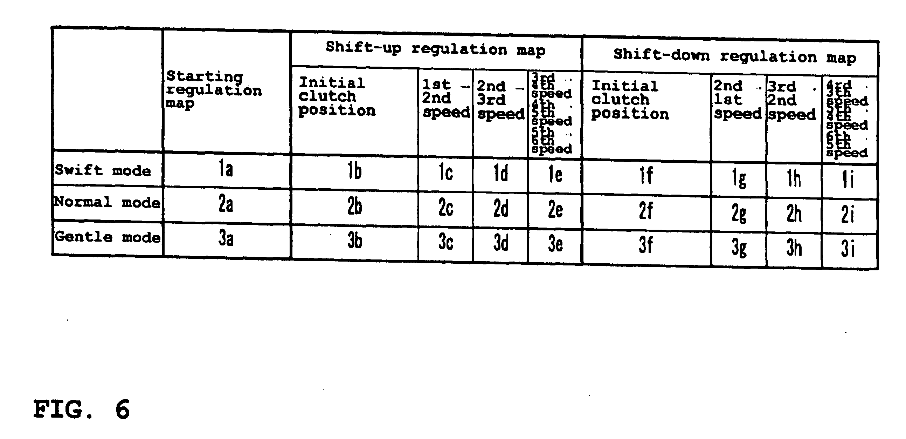

The EEPROM 94 is a rewritable and erasable data storage medium. The EEPROM 94 stores a regulation map 94a which regulates the target position where the clutch is to be positioned (target clutch position). As will later be described using FIG. 6, plural types of regulation maps 94a are stored for various running conditions (at vehicle start-up, at a shift up, at a shift down) of the two-wheeled motor vehicle 10. The main microcomputer 90 performs drive control of the clutch actuator 63 with reference to the results of detection by the clutch position sensor 68 based on the clutch actuator control program 91 a and a regulation map selected from the plural types of regulation maps 94a. The EEPROM 94 corresponds to the map storage device in the present embodiment. Also, in this embodiment, the ECU 100 incorporating the main microcomputer 90 corresponds to the clutch control device in the present embodiment.

A power source circuit 98 connected to the battery 97 has a main switch 96 which is switched on or off in synchronization with a key switch (not shown). When the main switch 96 is switched on, the power source circuit 98 converts the voltage from the battery 97 into a voltage for driving the main microcomputer 90 and supplies it to the main microcomputer 90.

FIG. 6 shows the regulation maps 94a stored in the EEPROM 94 shown in FIG. 3. In the two-wheeled motor vehicle 10 according to the embodiment, one running mode can be selected from three running modes (swift mode, normal mode and gentle mode) according to a specific operation. The selection of the running mode is made by human manipulation. The human manipulation may be made in any specific way. For example, the human manipulation may be made by a mechanic or the like who operates a switch or the like provided inside the vehicle body. The switch may be installed at a specific position on the handlebars 41, for example, so that the rider of the two-wheeled motor vehicle 10 can select the running mode. An existing switch such as the shift switch 43 may be used also as the switch for this purpose.

In each running mode of the two-wheeled motor vehicle 10 according to the embodiment, a regulation map in accordance with the running condition is selected, and drive control of the clutch actuator 63 is performed based on the selected regulation map. For example, in the normal mode, a starting regulation map 2a is selected at vehicle start-up, shift-up regulation maps 2b-2e are selected at a shift up, and shift-down regulation maps 2f-2i are selected at a shift down.

In this embodiment, different shift-up regulation maps are used before and after a specific clutch position (which is hereinafter referred to as "initial clutch position") between the engaged state and the disengaged state of the clutch 54. The driving behavior of the clutch actuator 63 from the disengaged state to the initial clutch position of the clutch 54 is regulated by the regulation maps 1b, 2b and 3b. The driving behavior of the clutch actuator 63 after the initial clutch position is regulated by the regulation maps 1c to 1e, 2c to 2e and 3c to 3e. After the initial clutch position, different regulation maps are selected depending on the shift position for the shift up.

Also, in this embodiment, different shift-down regulation maps are used before and after the initial clutch position, as in the case of the shift-up regulation maps described above. The driving behavior of the clutch **54** from the disengaged state to the initial clutch position of the clutch 54 is regulated by the regulation maps 1f, 2f and 3f. The driving behavior of the clutch **54** after the initial clutch position is regulated by the regulation maps 1g to 1i, 2g to 2i and 3g to 3i. After the initial clutch position, different regulation maps are selected depending on the shift position for the shift down.

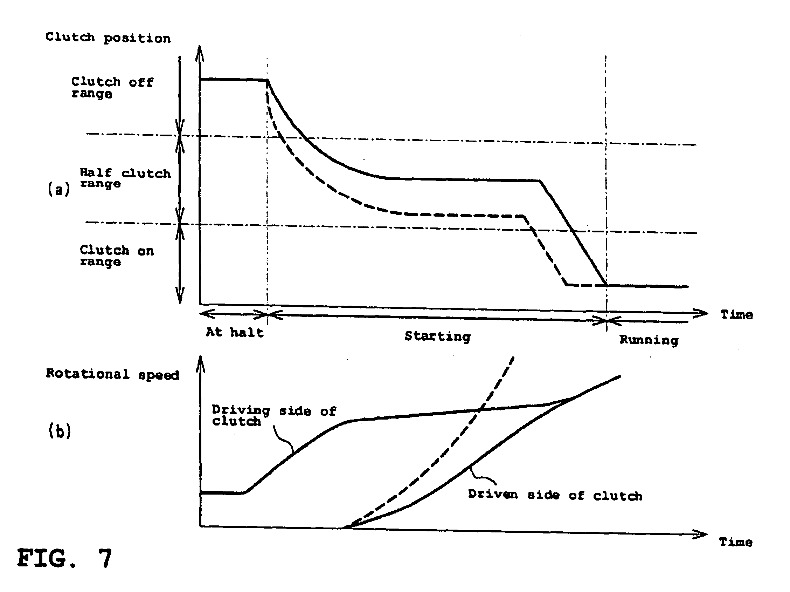

FIG. 7 shows the transition of the state of the two-wheeled motor vehicle 10 at vehicle start-up. FIG. 7(a) shows the transition of the target clutch position over time, from the beginning to the end of the starting-to-run. FIG. 7(b) shows the transition of the rotational speeds of the driving side and the driven side of the clutch 54 over time, from the beginning to the end of the starting-to-run. The rotational speed of the driving side of the clutch 54 can be measured by the engine rotational speed sensor 53. The rotational speed of the driven side of the clutch 54 can be measured by the main shaft rotational speed sensor 56.

As shown in FIG. 7(a), when the two-wheeled motor vehicle 10 starts to run, the clutch 54 is gradually engaged from the disengaged state and reaches the engaged state through a half-clutch state based on the starting regulation map. Also, as shown in FIG. 7(b), the rotational speed of the driven side of the clutch gradually approximates that of the driving side of the clutch during the engagement process of the clutch 54, and the rotational speeds of the driven and driving sides are equal to each other in the engaged state of the clutch 54. In FIGs. 7(a) and 7(b), the solid lines correspond to the case where the normal mode is selected, and the broken lines correspond to the case where the swift mode is selected.

The broken line of FIG. 7(b) denotes the rotational speed of the driven side of the clutch in the swift mode. Here, in order to facilitate understanding of the improvement in the response at different target clutch positions, the rotational speed of the driving side of the clutch is controlled to be generally the same in either mode. That is, in the swift mode, the throttle opening is controlled to be slightly larger so that the rotational speed of the driving side of the clutch changes in the same way as in the normal mode. However, it should be noted that the swift mode is not limited to such control.

In this embodiment, the transition of the clutch position over time at vehicle start-up can be changed by selecting any one of the three running modes (swift mode, normal mode and gentle mode).

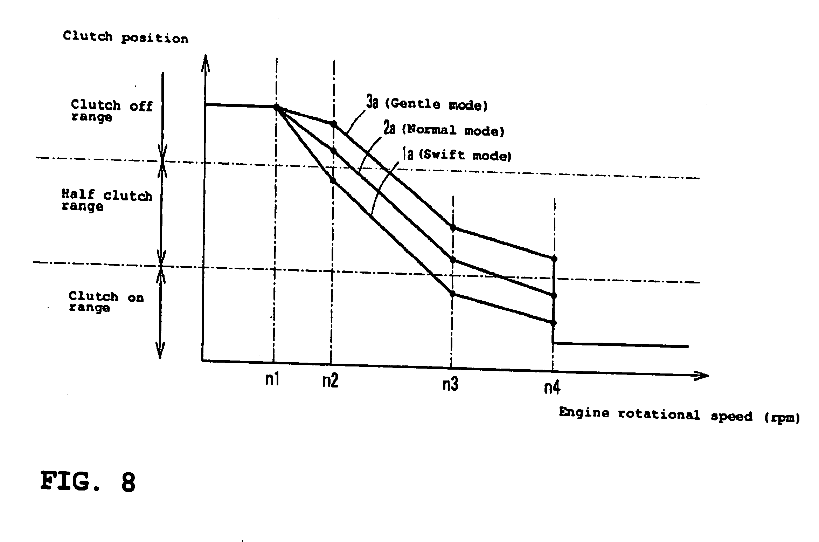

FIG. 8 shows the starting regulation maps for the respective running modes. The starting regulation maps 1a, 2a and 3a each define the relationship between the engine rotational speed and the target clutch position. The ECU 100 performs drive control of the clutch actuator 63 based on the starting regulation map corresponding to the selected running mode. That is, the ECU 100 performs drive control of the clutch actuator 63 such that the target clutch positions indicated by the selected starting regulation map are achieved at respective engine rotational speeds n1 to n4.

As shown in FIG. 8, the target clutch positions at the engine rotational speeds n2 to n4 indicated by the starting regulation map 1a for the swift mode are deviated to the clutch engaged side (lower side of FIG. 8) with respect to those indicated by the starting regulation map 2a for the normal mode. With these characteristics, the swift mode allows swift starting operation in response to an accelerator operation compared to the normal mode. Also, the target clutch positions at the engine rotational speeds n2 to n4 indicated by the starting regulation map 3a for the gentle mode are deviated to the clutch disengaged side (upper side of FIG. 8) with respect to those indicated by the starting regulation map 2a for the normal mode. With these characteristics, the gentle mode allows gentle starting operation in response to an accelerator operation compared to the normal mode.

In FIG. 7, as described above, the solid lines indicate the transition over time in the case where the normal mode is selected, while the broken lines indicate the transition over time in the case where the swift mode is selected. As shown in FIG. 7, the period for clutch engagement in the swift mode is shorter than that in the normal mode. Also, the period until the rotational speeds of the driving side and the driven side of the clutch 54 become equal to each other in the swift mode is shorter than that in the normal mode. Thus, the swift mode allows swift starting operation in response to an accelerator operation compared to the normal mode.

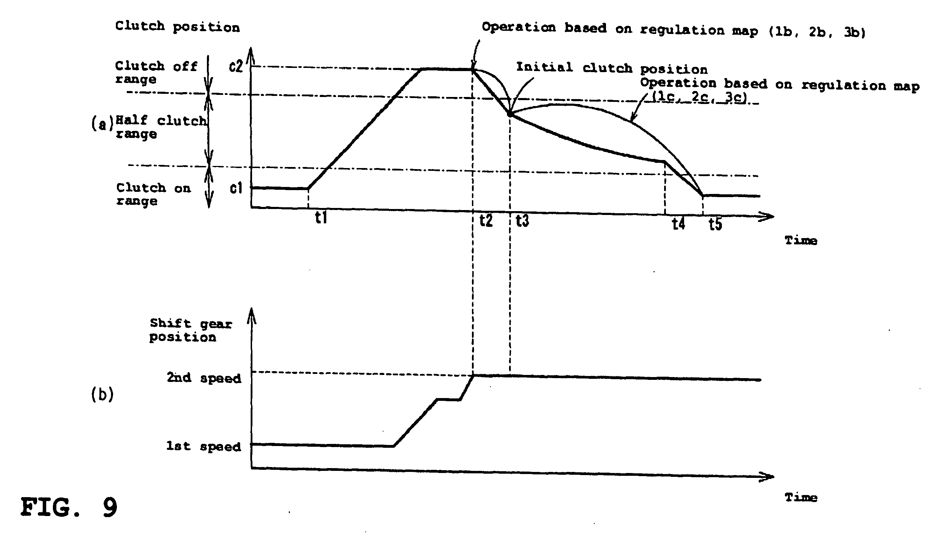

FIG. 9 shows the transition of the state of the two-wheeled motor vehicle 10 at a shift up. FIG. 9 shows the case of a shift up from the 1st gear to the 2nd gear. FIG. 9(a) shows the transition of the clutch position over time, from the beginning to the end of the shift up. FIG. 9(b) shows the transition of the shift gear position over time, from the start to the end of the shift up. The shift gear position can be detected by the gear position sensor 70.

As shown in FIGs. 9(a) and 9(b), at a shift up of the two-wheeled motor vehicle 10, the clutch 54 is disengaged from the engaged state at a constant rate to carry out a gear change (in FIG. 9, from the 1 st gear to the 2nd gear). After the gear change is carried out, the clutch 54 is gradually engaged and reaches the engaged state through a half-clutch state based on the shift-up regulation maps 1b to 1e, 2b to 2e or 3b to 3e. In this embodiment, the transition of the clutch position over time during a clutch engagement process at a shift up can be changed by selecting any one of the three running modes.

In this embodiment, the shift-up regulation map 1b, 2b or 3b is used for drive control of the clutch actuator 63 during the period from the clutch off state to the initial clutch position shown in FIG. 9 (the period from t2 to t3), and the shift-up regulation map 1c, 2c or 3c is used for drive control of the clutch actuator 63 during the period from the initial clutch position to the clutch on state (the period from t3 to t5).

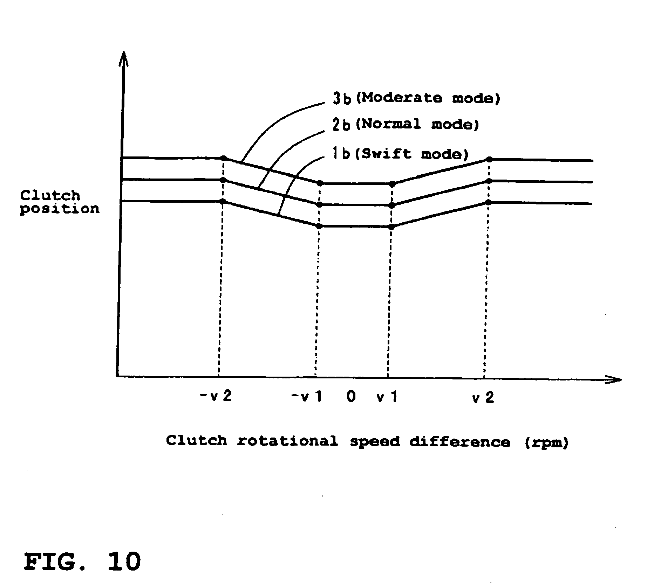

FIG. 10 shows the shift-up regulation maps for the respective running modes, used during the period from the clutch off state to the initial clutch position. The shift-up regulation maps 1b, 2b and 3b each define the relationship between the clutch rotational speed difference and the target clutch position. The clutch rotational speed difference is the difference between the rotational speeds of the clutch housing 54a and the clutch boss 54b, and equal to the difference between the rotational speed of the crankshaft 52 (see FIG. 2) (engine rotational speed) and the rotational speed of the main shaft 55. The clutch rotational speed difference can be calculated using the engine rotational speed sensor 53 and the main shaft rotational speed sensor 56.

The ECU 100 performs drive control of the clutch actuator 63 based on the shift-up regulation map corresponding to the selected running mode. That is, the ECU 100 performs drive control of the clutch actuator 63 such that the target clutch positions indicated by the selected shift-up regulation map are achieved at respective clutch rotational speed differences (-v2, -v1, 0, v1 and v2).

As shown in FIG. 10, the target clutch positions at the clutch rotational speed differences (-v2, -v1, 0, v1 and v2) indicated by the shift-up regulation map 1b for the swift mode are deviated to the clutch engaged side (lower side of FIG. 10) with respect to those indicated by the shift-up regulation map 2b for the normal mode. With these characteristics, the swift mode allows swift shift up operation in response to an operation of the shift up switch 43a (see FIG. 2). Also, the target clutch positions at the respective clutch rotational speed differences indicated by the shift-up regulation map 3b for the gentle mode are deviated to the clutch disengaged side (upper side of FIG. 10) with respect to those indicated by the shift-up regulation map 2b for the normal mode. With these characteristics, the gentle mode allows gentle shift up operation in response to an operation of the shift up switch 43a compared to the normal mode.

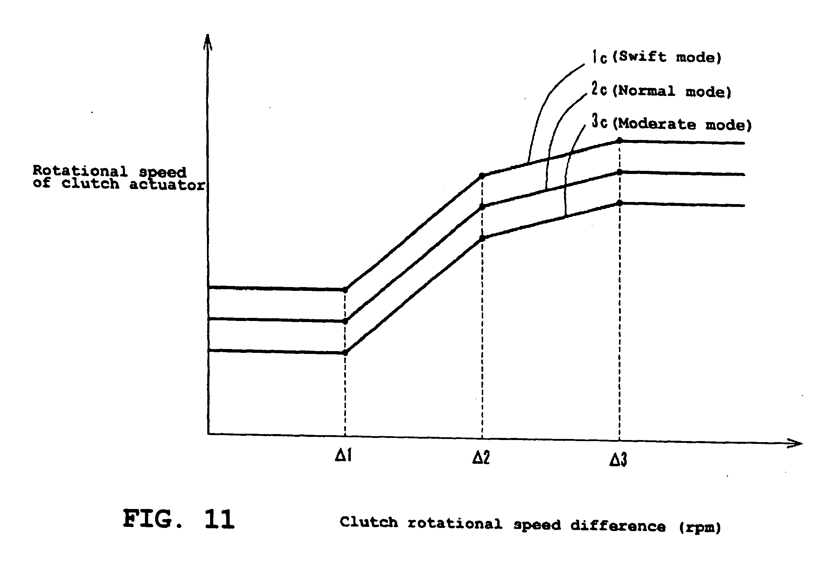

FIG. 11 shows the shift-up regulation maps for the respective running modes, used during the period from the initial clutch position to the clutch on state. The shift-up regulation maps in the drawing are those for use at a shift up from the 1 st gear to the 2nd gear. The shift-up regulation maps 1c, 2c and 3c each define the relationship between the clutch rotational speed difference and the rotational speed of the clutch actuator 63. The ECU 100 performs drive control of the clutch actuator 63 based on the shift-up regulation map corresponding to the selected running mode. That is, the ECU 100 performs drive control of the clutch actuator 63 such that the rotational speeds indicated by the selected shift-up regulation map are achieved at respective clutch rotational speed differences (Δ1, Δ2 and Δ3). When the rotational speed of the clutch actuator 63 is determined, the target clutch position is uniquely determined.

As shown in FIG. 11, the rotational speeds of the clutch actuator 63 at the respective clutch rotational speed differences (Δ1, Δ2 and Δ3) indicated by the shift-up regulation map 1 c for the swift mode are faster than those indicated by the shift-up regulation map 2c for the normal mode. With these characteristics, the swift mode allows swift shift up operation compared to the normal mode. Also, the rotational speeds of the clutch actuator 63 at the respective clutch rotational speed differences indicated by the shift-up regulation map 3c for the gentle mode are slower than those indicated by the shift-up regulation map 2c for the normal mode. With these characteristics, the gentle mode allows gentle shift up operation compared to the normal mode.

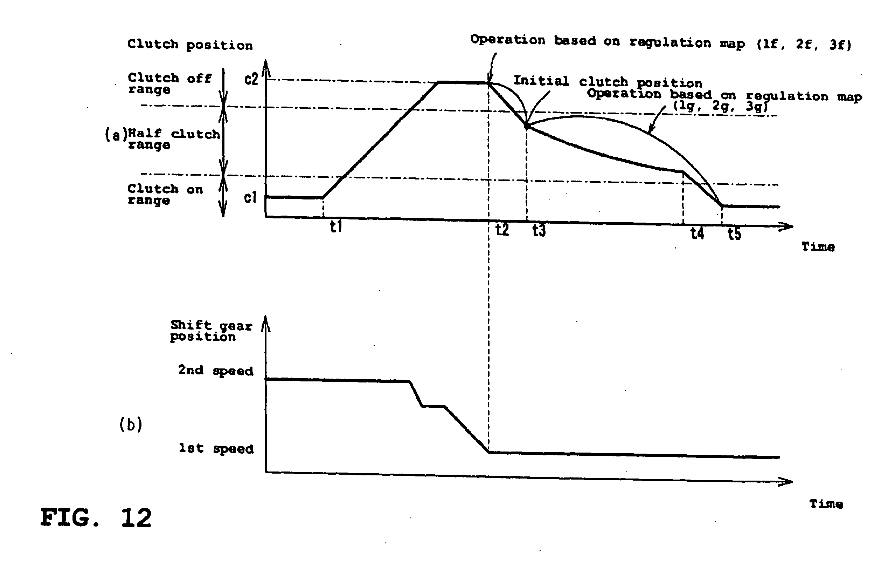

FIG. 12 shows the transition of the state of the two-wheeled motor vehicle 10 at a shift down. FIG. 12 shows the case of a shift down from the 2nd gear to the 1 st gear. FIG. 12(a) shows the transition of the clutch position over time, from the beginning to the end of the shift down. FIG. 12(b) shows the transition of the shift gear position over time, from the start to the end of the shift down.

As shown in FIGs. 12(a) and 12(b), at a shift down of the two-wheeled motor vehicle 10, the clutch 54 is disengaged from the engaged state at a constant rate to carry out a gear change (in FIG. 12, from the 2nd gear to the 1 st gear). After the gear change is carried out, the clutch 54 is gradually engaged and reaches the engaged state through a half-clutch state based on the shift-down regulation maps 1f to 1i, 2f to 2i or 3f to 3i. In this embodiment, the transition of the clutch position over time during a clutch engagement process at a shift down can be changed by selecting any one of the three running modes (normal mode, swift mode and gentle mode).

In this embodiment, the shift-down regulation map 1f, 2f or 3f is used for drive control of the clutch actuator 63 during the period from the clutch off state to the initial clutch position shown in FIG. 12 (the period from t2 to t3), and the shift-down regulation map 1g, 2g or 3g is used for drive control of the clutch actuator 63 during the period from the initial clutch position to the clutch on state (the period from t3 to t5).

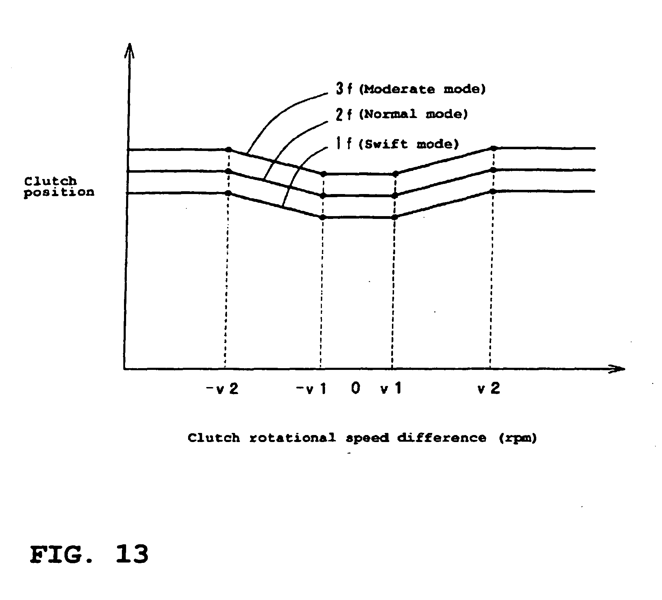

FIG. 13 shows the shift-down regulation maps for the respective running modes, used during the period from the clutch off state to the initial clutch position. The shift-down regulation maps 1f, 2f and 3f each define the relationship between the clutch rotational speed difference and the target clutch position. The ECU 100 performs drive control of the clutch actuator 63 based on the shift-down regulation map corresponding to the selected running mode. That is, the ECU 100 performs drive control of the clutch actuator 63 such that the target clutch positions indicated by the selected shift-down regulation map are achieved at respective clutch rotational speed differences (-v2, -v1, 0, v1 and v2).

As shown in FIG. 13, the target clutch positions at the respective clutch rotational speed differences (-v2, -v1, 0, v1 and v2) indicated by the shift-down regulation map 1 f for the swift mode are deviated to the clutch engaged side with respect to those indicated by the shift-down regulation map 2f for the normal mode. With these characteristics, the swift mode allows swift shift down operation in response to an operation of the shift down switch 43b (see FIG. 2). Also, the target clutch positions at the respective clutch rotational speed differences indicated by the shift-down regulation map 3f for the gentle mode are deviated to the clutch disengaged side with respect to those indicated by the shift-down regulation map 2f for the normal mode. With these characteristics, the gentle mode allows gentle shift up operation in response to an operation of the shift down switch 43b compared to the normal mode.

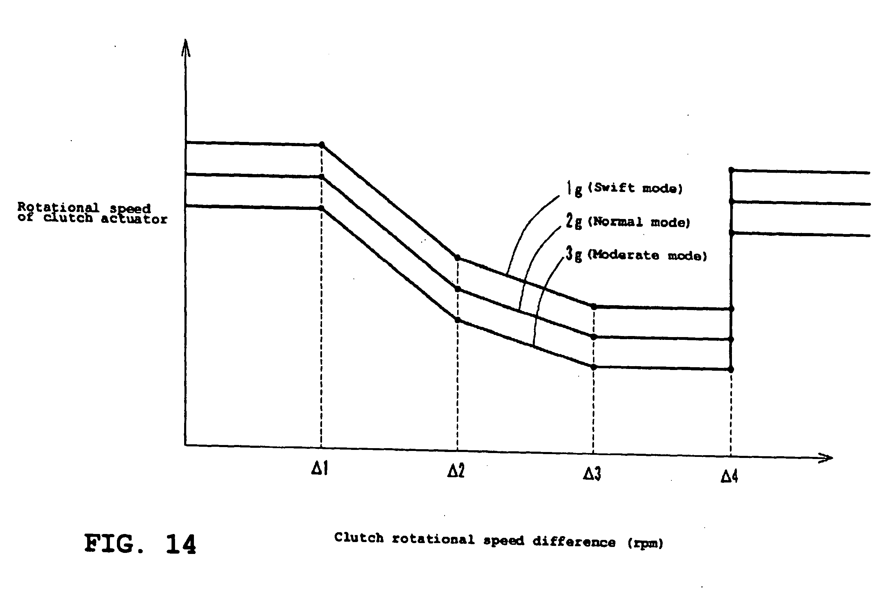

FIG. 14 shows the shift-down regulation maps for the respective running modes, used during the period from the initial clutch position to the clutch on state. The shift-down regulation maps in the drawing are those for use at a shift down from the 2nd gear to the 1 st gear. The shift-down regulation maps lg, 2g and 3g each define the relationship between the clutch rotational speed difference and the rotational speed of the clutch actuator 63. The ECU 100 performs drive control of the clutch actuator 63 based on the shift-down regulation map corresponding to the selected running mode. That is, the ECU 100 performs drive control of the clutch actuator 63 such that the rotational speeds indicated by the selected shift-down regulation map are achieved at respective clutch rotational speed differences (Δ1, Δ2 and Δ3).

As shown in FIG. 14, the rotational speeds of the clutch actuator 63 at the respective clutch rotational speed differences (Δ1, Δ2 and Δ3) indicated by the shift-down regulation map 1g for the swift mode are faster than those indicated by the shift-down regulation map 2g for the normal mode. With these characteristics, the swift mode allows swift shift down operation compared to the normal mode. Also, the rotational speeds of the clutch actuator 63 at the respective clutch rotational speed differences indicated by the shift-down regulation map 3g for the gentle mode are slower than those indicated by the shift-down regulation map 2g for the normal mode. With these characteristics, the gentle mode allows gentle shift down operation compared to the normal mode.

As described using FIGs. 7 to 14, in the two-wheeled motor vehicle 10 according to this embodiment, the target clutch position can be changed by human manipulation by selecting any one of the three running modes, and as a result the engagement behavior of the clutch 54 can be changed variously. More specifically, when the swift mode is selected, swift response can be obtained at vehicle start-up, at a shift up and at a shift down, compared to the normal mode. Also, when the gentle mode is selected, gentle response can be obtained at vehicle start-up, at a shift up and at a shift down, compared to the normal mode. In this embodiment, response at vehicle start-up, at a shift up and at a shift down is not changed by changing the throttle opening according to an accelerator input, but by changing the target clutch position. That is, response control is independent of throttle control in this embodiment.

As has been described above, in order to perform swift starting operation, shift up operation and shift down operation of the two-wheeled motor vehicle 10 according to this embodiment, the swift mode is selected to regulate the target clutch position based on the regulation maps 1 a to 1i for the swift mode. Also, in order to perform gentle starting operation, shift up operation and shift down operation, the gentle mode is selected to regulate the target clutch position based on the regulation maps 3a to 3i for the gentle mode. In this way, starting operation, shift up operation and shift down operation of the two-wheeled motor vehicle 10 can be adjusted so as to obtain response in coincidence with user intentions.

In addition, in order to improve response, this embodiment does not adopt an extension of the conventional art, but the novel technique of changing the target clutch position based on the new findings made by the present inventor as stated earlier herein. Thus, response can be adjusted easily and suitably.

Also, post-adjustment of response can be freely performed by human manipulation in this embodiment. Therefore, in case individual differences occur in the response of the two-wheel motor vehicle 10 in the manufacturing process or the like, the driving behavior of the clutch actuator 63 can be changed to cancel such individual differences.

In the embodiment described above, the EEPROM 94 stores regulation maps corresponding to the respective running modes. Alternatively, the EEPROM 94 (see FIG. 3) may store regulation maps for one running mode, which are overwritten with regulation maps corresponding to another running mode when the running mode is changed. That is, the EEPROM 94 may store the regulation maps 2a to 2i for the normal mode by default, and may be overwritten with the regulation maps 1 a to 1i for the swift mode at a change to the swift mode, and overwritten with the regulation maps 3a to 3i for the gentle mode at a change to the gentle mode. Also with this configuration, response in coincidence with user intentions can be obtained, as in the case of the two-wheeled motor vehicle 10 according to this embodiment.

Another configuration is also possible, in which, for example, the EEPROM 94 stores regulation maps for one running mode while the ROM 91 (see FIG. 3) of the main microcomputer 90 or the like stores a specific correction program, so that the regulation maps are subjected to a correction computation process in response to a running mode change command. For example, in response to a change command from the normal mode to the swift mode, the regulation maps 2a to 2i for the normal mode stored in the EEPROM 94 may be subjected to a correction computation process based on the above correction program, so that the regulation maps 1 a to 1i for the swift mode can be obtained and the EEPROM 94 is overwritten therewith. Also with this configuration, response in coincidence with user intentions can be obtained, as in the case of the two-wheeled motor vehicle 10 according to this embodiment.

Moreover, as shown in FIGs. 8, 10, 11, 13 and 14, the target clutch position (or the rotational speed of the clutch actuator 63, which uniquely corresponds to the target clutch position) is uniformly changed through the respective engine rotational speeds (n2 to n4) or the respective rotational speed differences (-v2 to v2, Δ1 to Δ3) in the regulation maps for the respective running modes. Therefore, the above correction program may be a simple correction computation program based on addition, subtraction and remainder calculation, rather than a complicated correction computation program. In the present invention, the target clutch position (or the rotational speed of the clutch actuator 63) is not necessarily corrected in stages (in the above-described example, three stages) as described above, but may be continuously corrected.

As has been described above, the present embodiments are useful for a clutch control device for controlling an automatic clutch device.

The description above discloses (amongst others) an embodiment of a clutch control device, which is a clutch control device for controlling an automatic clutch device having a friction clutch interposed between a driving-side power transmission mechanism and a driven-side power transmission mechanism, and an electric actuator for engaging and disengaging the friction clutch directly or indirectly. The clutch control device includes: a driving-side rotational speed detection device for detecting a driving-side rotational speed, which is a rotational speed of a driving part of the friction clutch or the driving-side power transmission mechanism; a clutch position detection device for detecting a position of the friction clutch; a storage device for storing a target position of the clutch set in association with the driving-side rotational speed; a drive control unit for receiving a detected value of the driving-side rotational speed from the driving-side rotational speed detection device to perform drive control of the friction clutch based on the target position of the clutch corresponding to the detected value stored in the storage device; and a clutch position change device for changing the target position according to human manipulation.

With the clutch control device described above, the change behavior of the position of the friction clutch can be suitably changed by changing the target position of the clutch through human manipulation. For example, the target position is adjusted so as to advance the connection of the friction clutch when swift starting operation is desired, while the target position is adjusted so as to delay the connection of the friction clutch, thereby providing response in coincidence with user intentions.

According to the present teaching, adjustable response can be made when the vehicle starts to run or is at a shift change, and easy or suitable clutch connection in accordance with user intentions is made possible.

The description further discloses, according to a first preferred aspect, a clutch control device for controlling an automatic clutch device having a friction clutch interposed between a driving-side power transmission mechanism and a driven-side power transmission mechanism, and an electric actuator for engaging and disengaging the friction clutch directly or indirectly, the clutch control device comprising: a driving-side rotational speed detection device for detecting a driving-side rotational speed, which is a rotational speed of a driving part of the friction clutch or the driving-side power transmission mechanism; a clutch position detection device for detecting a position of the friction clutch; a storage device for storing a target position of the clutch set in association with the driving-side rotational speed; a drive control unit for receiving a detected value of the driving-side rotational speed from the driving-side rotational speed detection device to perform drive control of the friction clutch based on the target position of the clutch corresponding to the detected value stored in the storage device; and a clutch position change device for changing the target position according to human manipulation.

Further, according to a second preferred aspect, the storage device is a map storage device for storing plural types of regulation maps for regulating the target position of the friction clutch; and the clutch position change device changes the target position based on one or more regulation maps selected from the plural types of regulation maps according to human manipulation.

Further, according to a third preferred aspect, the storage device is a map storage device for storing a regulation map for regulating the target position of the friction clutch; and the clutch position change device performs a specific correction computation process on the regulation map, and changes the target position based on the corrected regulation map obtained through the correction computation process.

Further, according to a fourth preferred aspect, the storage device is a map storage device for storing a regulation map for regulating the target position of the friction clutch; and the map storage device can overwrite the regulation map.

Further, according to a fifth preferred aspect, the regulation map regulates a relationship between the driving-side rotational speed and the target position of the clutch.

Further, according to a sixth preferred aspect, the driving-side power transmission mechanism includes an engine; and the regulation map regulates a relationship between an engine rotational speed and the target position of the clutch at a time of vehicle start-up.

Further, according to a seventh preferred aspect, the clutch control device further comprises: a driven-side rotational speed detection device for detecting a driven-side rotational speed, which is a rotational speed of a driven part of the friction clutch or the driven-side power transmission mechanism, wherein the regulation map regulates a relationship between a clutch rotational speed difference, which is a difference between the driving-side rotational speed and the driven-side rotational speed, and a driving speed of the actuator.

Further, according to an eighth preferred aspect, the clutch control device is mounted on a vehicle provided with a gearbox; and the regulation map regulates a relationship between the clutch rotational speed difference and the driving speed of the actuator at a time of a shift up or a shift down.

Further, according to a ninth preferred aspect, the clutch control device further comprises: a driven-side rotational speed detection device for detecting a driven-side rotational speed, which is a rotational speed of a driven part of the friction clutch or the driven-side power transmission mechanism, wherein the regulation map regulates a relationship between a clutch rotational speed difference, which is a difference between the driving-side rotational speed and the driven-side rotational speed, and the target position of the clutch.

Further, according to a tenth preferred aspect, the clutch control device is mounted on a vehicle provided with a gearbox; and the regulation map regulates a relationship between the clutch rotational speed difference and the target position of the clutch at a time of a shift up or a shift down.

The description further discloses, according to an eleventh preferred aspect, a vehicle comprising: the automatic clutch device described above; and the clutch control device according to one of the first to tenth preferred aspects..

Further, according to a twelfth preferred aspect, the automatic clutch device is of a hydraulic type.

Further, according to a thirteenth preferred aspect, the actuator is a motor.

The description further discloses, as a particularly preferred aspect, in order to provide a clutch control device for controlling an automatic clutch device that can make adjustable response at vehicle start-up or at a shift change in accordance with user intentions, an embodiment in which an EEPROM of an ECU (engine control unit) stores regulation maps corresponding to three types of running modes (normal mode, swift mode and gentle mode), wherein the regulation maps regulate the relationship between the clutch rotational speed difference and the target clutch position, and wherein when any one of the running modes is selected according to user intentions, the target clutch position is uniformly changed according to the running mode.

## Claims

1. Automatic clutch device with a clutch control device and an automatic wet type multiple plate clutch (54), comprising:
a clutch actuator (63) connected to the clutch (54) for engaging and disengaging the clutch (54),
means (53) for detecting a driving-side rotation speed of the clutch (54),
means (68) for detecting a position of the clutch (54),
storage means (94) for storing a target position of the clutch (54) in association with the driving-side rotational speed, and
clutch position change means configured to change the target position according to human selection, wherein the clutch control device is provided for automatic control of the clutch actuator (63) to perform drive control of the clutch (54) based on the target position of the clutch (54) and the detected position of the clutch (54).

2. Automatic clutch device according to claim 1, wherein said clutch (54) is interposed between a driving-side power transmission mechanism (52) and a driven-side power transmission mechanism (55).

3. Automatic clutch device according to claim 2, wherein the driving-side rotational speed detection means (53) detects the driving-side rotational speed, which is a rotational speed of a driving part of the clutch (54) or the driving-side power transmission mechanism (52).

4. Automatic clutch device according to one of the claims 1 to 3, wherein the storage means (94) is a map storage means for storing plural types of regulation maps for regulating the target position of the clutch (54).

5. Automatic clutch device according to claim 4, wherein the clutch position change means changes the target position based on one or more regulation maps selected from the plural types of regulation maps according to human manipulation.

6. Automatic clutch device according to claim 4 or 5, wherein the clutch position change means performs a specific correction computation process on the regulation map, and changes the target position based on the corrected regulation map obtained through the correction computation process.

7. Automatic clutch device according to one of the claims 4 to 6, wherein the map storage means (94) can overwrite the regulation map.

8. Automatic clutch device according to one of the claims 4 to 7, wherein the regulation map regulates a relationship between the driving-side rotational speed and the target position of the clutch (54).

9. Automatic clutch device according to one of the claims 4 to 8, wherein the driving-side power transmission mechanism (52) includes an engine, and the regulation map regulates a relationship between an engine rotational speed and the target position of the clutch (54) at a time of vehicle start-up.

10. Automatic clutch device according to one of the claims 4 to 9, further comprising a driven-side rotational speed detection means for detecting a driven-side rotational speed, which is a rotational speed of a driven part of the clutch (54) or the driven-side power transmission mechanism (55).

11. Automatic clutch device according to claim 10, wherein the regulation map regulates a relationship between a clutch rotational speed difference, which is a difference between the driving-side rotational speed and the driven-side rotational speed, and a driving speed of the actuator (63).

12. Automatic clutch device according to claim 11, wherein the clutch control device is adapted to be mounted on a vehicle provided with a gearbox, and the regulation map regulates a relationship between the clutch rotational speed difference and the driving speed of the actuator (63) at a time of a shift up or a shift down.

13. Automatic clutch device according to claim 10, wherein the regulation map regulates a relationship between a clutch rotational speed difference, which is a difference between the driving-side rotational speed and the driven-side rotational speed, and the target position of the clutch (54).

14. Automatic clutch device according to claim 13, wherein the clutch control device is adapted to be mounted on a vehicle provided with a gearbox, and the regulation map regulates a relationship between the clutch rotational speed difference and the target position of the clutch (54) at a time of a shift up or a shift down.

15. Vehicle comprising the automatic clutch device according to one of the claims 1 to 14.

16. Vehicle according to claim 15, wherein the automatic clutch (54) is of a hydraulic type.

17. Vehicle according to claim 15 or 16, wherein the actuator (63) is a motor.

18. Method to automatic control an automatic wet type multiple plate clutch (54), comprising the steps of:
detecting a driving-side rotation speed of the clutch (54),
detecting a position of the clutch (54),
storing a target position of the clutch (54) in association with the driving-side rotational speed, and
changing the target position according to human selection,
perform automatic drive control of the clutch (54) based on the target position of the clutch (54) and the detected position of the clutch (54).

## Patentansprüche

1. Automatische Kupplungsvorrichtung mit einer Kupplungssteuerungsvorrichtung und einer automatischen Mehrscheibenkupplung (54) vom Nass- Typ, aufweisend:
einen Kupplungsbetätiger (63), verbunden mit der Kupplung (54) zum in Eingriff bringen oder aus dem Eingriff bringen der Kupplung (54),
einer Einrichtung (53) zum Erfassen einer antriebsseitigen Drehzahl der Kupplung (54),
einer Einrichtung (68) zum Erfassen einer Position der Kupplung (54),
einer Speichereinrichtung (94) zum Speichern einer Ziel- Position der Kupplung (54) in Verbindung mit der antriebsseitigen Drehzahl, und
einer Kupplungspositions- Veränderungseinrichtung, konfiguriert, die Ziel- Position nach menschlicher Auswahl zu verändern, wobei die Kupplungssteuerungsvorrichtung für eine automatische Steuerung des Kupplungsbetätigers (63) vorgesehen ist, um eine Antriebssteuerung der Kupplung auf der Grundlage der Ziel- Position der Kupplung (54) und der erfassten Position der Kupplung (54) auszuführen.

2. Automatische Kupplungsvorrichtung nach Anspruch 1, wobei die Kupplung (54) zwischen eine antriebsseitige Leistungsübertragungsvorrichtung (52) und ein abtriebsseitige Leistungsübertragungsvorrichtung (55) eingesetzt ist.

3. Automatische Kupplungsvorrichtung nach Anspruch 2, wobei die antriebsseitige Drehzahlerfassungseinrichtung (53) die antriebsseitige Drehzahl erfasst, die eine Drehzahl eines antreibenden Teils der Kupplung (54) oder der antriebsseitigen Leistungsübertragungsvorrichtung (52) ist.

4. Automatische Kupplungsvorrichtung nach einem der Ansprüche 1 bis 3, wobei die Speichereinrichtung (94) eine Plan- Speichereinrichtung ist, zum Speichern mehrerer Typen von Regelplänen zum Regeln der Ziel- Position der Kupplung (54).

5. Automatische Kupplungsvorrichtung nach Anspruch 4, wobei die Kupplungspositions- Veränderungseinrichtung die Ziel- Position auf der Grundlage von einem oder mehreren Regelplänen, ausgewählt aus den mehreren Typen von Regelplänen entsprechend menschlicher Betätigung ändert.

6. Automatische Kupplungsvorrichtung nach Anspruch 4 oder 5, wobei die Kupplungspositions- Veränderungseinrichtung ein spezielles Korrekturberechnungsverfahren in dem Regelplan ausführt und die Ziel- Position auf der Grundlage des korrigierten Regelplans, erhalten durch das Korrekturberechnungsverfahren, ändert.

7. Automatische Kupplungsvorrichtung nach einem der Ansprüche 4 bis 6, wobei die Plan- Speichereinrichtung (94) den Regelplan überschreiben kann.

8. Automatische Kupplungsvorrichtung nach einem der Ansprüche 4 bis 7, wobei der Regelplan eine Beziehung zwischen der antriebsseitigen Drehzahl und der Ziel- Position der Kupplung (54) regelt.

9. Automatische Kupplungsvorrichtung nach einem der Ansprüche 4 bis 8, wobei die antriebsseitige Leistungsübertragungsvorrichtung (52) eine Brennkraftmaschine enthält und der Regelplan eine Beziehung zwischen einer Brennkraftmaschinendrehzahl und der Ziel- Position der Kupplung (54) zu einer Zeit des Startens des Fahrzeuges regelt.

10. Automatische Kupplungsvorrichtung nach einem der Ansprüche 4 bis 9, außerdem aufweisend eine abtriebsseitige Drehzahlerfassungseinrichtung zum Erfassen einer abtriebsseitigen Drehzahl, die eine Drehzahl eines abtriebsseitigen Teils der Kupplung (54) oder der abtriebsseitigen Leistungsübertragungsvorrichtung (55) ist.

11. Automatische Kupplungsvorrichtung nach Anspruch 10, wobei der Regelplan eine Beziehung zwischen einer Kupplungsdrehzahldifferenz, die eine Differenz zwischen der antriebsseitigen Drehzahl und der abtriebsseitigen Drehzahl ist, und einer Antriebsdrehzahl des Betätigers (63) regelt.

12. Automatische Kupplungsvorrichtung nach Anspruch 11, wobei die Kupplungssteuerungsvorrichtung vorgesehen ist, um an einem Fahrzeug, versehen mit einem Getriebekasten, montiert zu werden, und der Regelplan eine Beziehung zwischen der Kupplungsdrehzahldifferenz und der Antriebsdrehzahl des Betätigers (63) zu einer Zeit eines Hochschaltens oder eines Herunterschaltens regelt.

13. Automatische Kupplungsvorrichtung nach Anspruch 10, wobei der Regelplan eine Beziehung zwischen einer Kupplungsdrehzahldifferenz, die eine Differenz zwischen der antriebsseitigen Drehzahl und der abtriebsseitigen Drehzahl ist, und der Ziel- Position der Kupplung (54) regelt.

14. Automatische Kupplungsvorrichtung nach Anspruch 13, wobei die Kupplungssteuerungsvorrichtung vorgesehen ist, an einem Fahrzeug, versehen mit einem Getriebekasten, montiert zu werden und der Regelplan eine Beziehung zwischen der Kupplungsdrehzahldifferenz und der Ziel- Position der Kupplung (54) zu einer Zeit eines Hochschaltens oder eines Herunterschaltens regelt.

15. Fahrzeug, das die automatische Kupplungsvorrichtung nach einem der Ansprüche 1 bis 14 aufweist.

16. Fahrzeug nach Anspruch 15, wobei die automatische Kupplungsvorrichtung (54) von einem Hydraulik- Typ ist.

17. Fahrzeug nach Anspruch 15 oder 16, wobei der Betätiger (63) ein Motor ist.

18. Verfahren zur automatischen Steuerung einer automatischen Mehrscheibenkupplung (54) vom Nass- Typ das die Schritte aufweist von:
Erfassen einer antriebsseitigen Drehzahl der Kupplung (54)
Erfassen einer Position der Kupplung (54)
Speichern einer Ziel- Position der Kupplung (54) in Verbindung mit der antriebsseitigen Drehzahl, und
Verändern der Ziel- Position entsprechend der menschlichen Auswahl,
Ausführen der automatischen Antriebssteuerung der Kupplung (54) auf der Grundlage der Ziel- Position der Kupplung (54) und der erfassten Position der Kupplung (54).

## Revendications

1. Dispositif d'embrayage automatique avec un dispositif de commande d'embrayage et un embrayage multidisque (54) de type automatique humide, comprenant :
un actionneur d'embrayage (63) raccordé à l'embrayage (54) pour mettre en prise et débrayer l'embrayage (54),
des moyens (53) pour détecter une vitesse de rotation du côté d'entraînement de l'embrayage (54),
des moyens (68) pour détecter une position de l'embrayage (54),
des moyens de stockage (94) pour stocker une position cible de l'embrayage (54) en association avec la vitesse de rotation du côté d'entraînement, et
des moyens de changement de position d'embrayage configurés pour changer la position cible selon la sélection humaine, dans lequel le dispositif de commande d'embrayage est prévu pour la commande automatique de l'actionneur d'embrayage (63) afin de réaliser la commande d'entraînement de l'embrayage (54) en fonction de la position cible de l'embrayage (54) et la position détectée de l'embrayage (54).

2. Dispositif d'embrayage automatique selon la revendication 1, dans lequel ledit embrayage (54) est interposé entre un mécanisme de transmission de puissance du côté d'entraînement (52) et un mécanisme de transmission de puissance du côté entraîné (55).

3. Dispositif d'embrayage automatique selon la revendication 2, dans lequel les moyens de détection de vitesse de rotation du côté d'entraînement (53) détectent la vitesse de rotation du côté d'entraînement, qui est une vitesse de rotation d'une partie d'entraînement de l'embrayage (54) ou du mécanisme de transmission de puissance du côté d'entraînement (52).

4. Dispositif d'embrayage automatique selon l'une quelconque des revendications 1 à 3, dans lequel les moyens de stockage (94) sont des moyens de stockage de carte pour stocker plusieurs types de cartes de régulation afin de réguler la position cible de l'embrayage (54).

5. Dispositif d'embrayage automatique selon la revendication 4, dans lequel les moyens de changement de position d'embrayage changent la position cible en fonction d'une ou plusieurs cartes de régulation choisies parmi plusieurs types de cartes de régulation selon la manipulation humaine.

6. Dispositif d'embrayage automatique selon la revendication 4 ou 5, dans lequel les moyens de changement de position d'embrayage réalisent un processus de calcul de correction spécifique sur la carte de régulation et changent la position cible en fonction de la carte de régulation corrigée obtenue par le processus de calcul de correction.

7. Dispositif d'embrayage automatique selon l'une quelconque des revendications 4 à 6, dans lequel les moyens de stockage de carte (94) peuvent écraser la carte de régulation.

8. Dispositif d'embrayage automatique selon l'une quelconque des revendications 4 à 7, dans lequel la carte de régulation régule une relation entre la vitesse de rotation du côté d'entraînement et la position cible de l'embrayage (54).

9. Dispositif d'embrayage automatique selon l'une quelconque des revendications 4 à 8, dans lequel le mécanisme de transmission de puissance du côté d'entraînement (52) comprend un moteur et la carte de régulation régule une relation entre une vitesse de rotation de moteur et la position cible de l'embrayage (54) au moment du démarrage du véhicule.

10. Dispositif d'embrayage automatique selon l'une quelconque des revendications 4 à 9, comprenant en outre des moyens de détection de vitesse de rotation du côté entraîné pour détecter une vitesse de rotation du côté entraîné, qui est une vitesse de rotation d'une partie entraînée de l'embrayage (54) ou du mécanisme de transmission de puissance du côté entraîné (55).

11. Dispositif d'embrayage automatique selon la revendication 10, dans lequel la carte de régulation régule une relation entre une différence de vitesse de rotation d'embrayage, qui est une différence entre la vitesse de rotation du côté d'entraînement et la vitesse de rotation du côté entraîné, et une vitesse d'entraînement de l'actionneur (63).

12. Dispositif d'embrayage automatique selon la revendication 11, dans lequel le dispositif de commande d'embrayage est adapté pour être monté sur un véhicule doté d'une boîte de vitesses et la carte de régulation régule une relation entre la différence de vitesse de rotation et la vitesse d'entraînement de l'actionneur (63) au moment où l'on passe au rapport de vitesse supérieur ou où l'on passe au rapport de vitesse inférieur.

13. Dispositif d'embrayage automatique selon la revendication 10, dans lequel la carte de régulation régule une relation entre une différence de vitesse de rotation d'embrayage qui est une différence entre la vitesse de rotation du côté d'entraînement et la vitesse de rotation du côté entraîné, et la position cible de l'embrayage (54).

14. Dispositif d'embrayage automatique selon la revendication 13, dans lequel le dispositif de commande d'embrayage est adapté pour être monté sur un véhicule doté d'une boîte de vitesses et la carte de régulation régule une relation entre la différence de vitesse de rotation d'embrayage et la position cible de l'embrayage (54) au moment où l'on passe au rapport de vitesse supérieur ou où l'on passe au rapport de vitesse inférieur.

15. Véhicule comprenant le dispositif d'embrayage automatique selon l'une quelconque des revendications 1 à 14.

16. véhicule selon la revendication 15, dans lequel l'embrayage automatique (54) est d'un type hydraulique.

17. Véhicule selon la revendication 15 ou 16, dans lequel l'actionneur (63) est un moteur.

18. Procédé pour commander automatiquement un embrayage multidisque de type humide automatique (54), comprenant les étapes consistant à :
détecter une vitesse de rotation du côté d'entraînement de l'embrayage (54),
détecter une position de l'embrayage (54),
stocker une position cible de l'embrayage (54) en association avec la vitesse de rotation du côté d'entraînement, et
changer la position cible selon la sélection humaine,
réaliser la commande d'entraînement automatique de l'embrayage (54) en fonction de la position cible de l'embrayage (54) et de la position détectée de l'embrayage (54).
